# EUROPEAN PATENT APPLICATION

(11) **EP 3 067 799 A1**
(43) Date of publication of application: **14.09.2016**
(21) Application number: 14860081.0
(22) Date of filing: 08.10.2014
(51) Int. Cl.: G06F 11/00, G06F 9/445, H04N 21/443, H04N 21/643

(54) **COMMUNICATION DEVICE, COMMUNICATION SYSTEM, COMMUNICATION METHOD, AND COMMUNICATION PROGRAM**

(30) Priority: 05.11.2013 JP 2013229104
(71) Applicant: Ricoh Company, Ltd., Tokyo 143-8555 (JP)
(72) Inventor: MIHARA, Akihiro, Tokyo 143-8555 (JP); NAKAMURA, Shigeru, Tokyo 143-8555 (JP)
(74) Representative: Schwabe - Sandmair - Marx
(86) International application number: PCT/JP2014/076967
(87) International publication number: WO 2015/068518

(57) **Abstract**

A communication apparatus includes a receiver configured to receive metadata of update data for use in updating, a determination unit configured to determine whether there are update data subject to preliminary downloading indicating downloading the update data in advance before an update allowable time, based on a description of the metadata, and an update process unit configured to download the update data when the determination unit determines that there are the update data subject to preliminary downloading.

## Description

### [Technical Field]

The disclosures discussed herein relate to a communication apparatus, a communication system, a communication method, and a communication program.

### [Background Art]

In the communication systems such as a TV conference system (or a videoconference system), firmware (programs) of terminal apparatuses may be updated on a regular basis to improve confidentiality of phone communications and operational performances. The communication systems known in the art employ a technique to update the programs by accessing a server from the terminal apparatuses via a network to acquire update data and meta-information (metadata) (see Patent Documents 1 and 2). Acquiring the meta-information in advance for determining the need of updating the programs, and subsequently acquiring update data may prevent users from acquiring unnecessary update data. Note that the update data may generally be downloaded after the date at which the programs are allowed to start being updated.

In order to prevent traffic saturation in a communication line due to access concentration of download requests, the applicant has filed an application relating to a technology to enable the users of the terminal apparatuses to preliminarily download the update data and the meta-information (preliminary downloading) and execute updating after the preset date (undisclosed at present). The preliminary downloading is executed under the condition of the users' performing explicit operations.

### [Related-Art Documents]

### [Patent Documents]

[Patent Document 1] Japanese Unexamined Patent Application Publication No. 2012-084118
[Patent Document 2] Japanese Unexamined Patent Application Publication No. 2013-020506

### [Summary of the Invention]

### [Problem to be Solved by Invention]

As already described above, the preliminary downloading is effective in preventing access concentration of the download requests to facilitate updating; however, the preliminary downloading is executed merely under the condition of the users' performing explicit operations. Thus, there may remain some concern about unexecuted preliminary downloading.

That is, the users may receive an availability report of the preliminary downloading via the user interface; however, the users may be too busy for preparing the TV conference or the like to execute the preliminary downloading at that time and then completely forget about it, or the users will not execute the preliminary downloading due to their insufficient understanding of a preliminary downloading function. In addition, when a communication apparatus is shared by two or more users, it is frequently unclear about where responsibility of management of the communication apparatus lies, which may make the users reluctant to perform extra operations. The update may remain unexecuted until the update becomes a mandatory update (forced update).

It is one of objects of the present invention to solve such problems. In other words, it is an object of the present invention to provide a technology to encourage various users to execute preliminary downloading.

### [Means to Solve the Problem]

According to an aspect of the disclosure, there is proviced an imaging device that includes a communication apparatus that includes a receiver configured to receive metadata of update data for use in updating; a determination unit configured to determine whether there are update data subject to preliminary downloading indicating downloading the update data in advance before an update allowable time, based on a description of the metadata; and an update process unit configured to download the update data when the determination unit determines that there are the update data subject to preliminary downloading.

### [Advantageous Effect of the Invention]

An aspect of the embodiments provides a technology to encourage various users to execute preliminary downloading.

### [Brief Description of Drawings]

FIG. 1 is a diagram illustrating a configuration example of a communication system according to an embodiment;
FIG. 2 is a diagram illustrating a hardware configuration example of a phone terminal;
FIG. 3 is a diagram illustrating a hardware configuration example of a relay apparatus, a communication management server, and an update server;
FIG. 4 is a diagram illustrating functional configuration examples of the phone terminal and the update server;
FIG. 5 is a flowchart illustrating a process example of an update data provider of the update server;
FIG. 6 is a diagram illustrating an example of metadata;
FIG. 7 is a flowchart (1) illustrating a process example of the phone terminal;
FIG. 8 is a flowchart (2) illustrating a process example of the phone terminal;
FIG. 9 is a diagram illustrating an example of a startup screen;
FIG. 10 is a diagram illustrating an example of a setting screen;
FIG. 11 is a diagram illustrating an example of a verifying screen;
FIG. 12 is a diagram illustrating an example of a verification window;
FIG. 13 is a diagram illustrating an example of a verifying screen;
FIG. 14 is a diagram illustrating an example of a setting screen;
FIG. 15 is a diagram illustrating an example of a verifying screen;
FIG. 16 is a flowchart (3) illustrating a process example of the phone terminal;
FIG. 17 is a diagram illustrating an example of an update screen; and
FIG. 18 is a diagram illustrating an example of a verifying screen.

### [Mode for Carrying Out the Invention]

The following illustrates preferred embodiments.

### CONFIGURATION

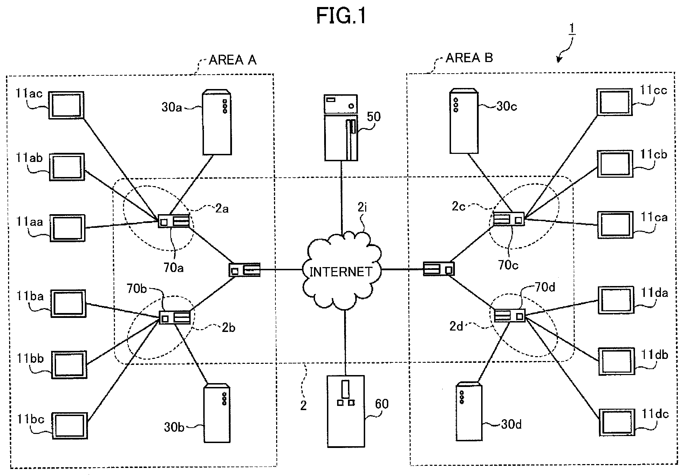

FIG. 1 is a diagram illustrating a configuration example of a communication system according to an embodiment.

FIG. 1 illustrates a communication system 1 including phone terminals 11aa to 11ac, 11ba to 11bc, 11ca to 11cc and 11da to 11dc serving as communication apparatuses, a communication management server 50, an update server 60, and routers 70a to 70d that are communicatively connected to one another via a communication network 2. Specifically, the communication system 1 includes LANs 2a, 2b, 2c, and 2d connected to the Internet 2i via the routers 70a to 70d, the communication management server 50 and the update server 60 connected to the Internet 2i, the phone terminals 11aa to 11ac and the relay apparatus 30a connected to the LAN 2a, the phone terminals 11ba to 11bc and the relay apparatus 30b connected to the LAN 2b, the phone terminals 11ca to 11cc and the relay apparatus 30c connected to the LAN 2c, and the phone terminals 11da to 11dc and the relay apparatus 30d connected to the LAN 2d. In the communication system 1, the phone terminals 11aa to 11ac and 11ba to 11bc in an area A communicate with the phone terminals 11ca to lice and 11da to 11dc in an area B by mutually transmitting and receiving data including at least one of sound and video (images) via the relay apparatuses 30a, 30b, 30c, and 30d, under the management of the communication management server 50.

Specifically, the communication management server 50 manages information such as communication addresses of the phone terminals 11aa to 11ac, 11ba to 11bc, 11ca to 11cc, and 11da to 11dc, communication addresses of the relay apparatuses 30a, 30b, 30c, and 30d, the phone terminals to which the relay apparatuses 30a, 30b, 30c, and 30d relay data, and calling statuses of the phone terminals 11. For example, when the phone terminal 11aa makes a phone call to the phone terminal 11ca, the phone terminal 11aa requests the relay apparatus 30a to relay the phone call to the phone terminal 11ca. The relay apparatus 30a reports the start of the phone call by the phone terminal 11aa to the communication management server 50, and acquires a communication address of the relay apparatus 30c for relaying the phone call to the phone terminal 11ca. The relay apparatus 30a subsequently requests the relay apparatus 30c to relay the phone call to the phone terminal 11ca, and the relay apparatus 30c starts a communication session with the phone terminal 11ca. The relay apparatus 30c subsequently reports the start of the communication session with the phone terminal 11ca to the communication management server 50.

The communication between the phone terminal 11aa and the phone terminal 11ca has thus started via the relay apparatuses 30a and 30c. The communication management server 50 further manages a phone call status such as an engaged status of the phone call between the phone terminals 11aa and 11ca. For example, when the communication management server 50 has received an inquiry about the phone call status of the phone terminal 11aa or 11ca from the phone terminal 11ab, the communication management server 50 transmits a response indicating that the phone terminal 11aa or 11ca is online but the phone terminals 11aa and 11ca are mutually engaged in their phone calls, talking to each other.

In the following description, any of apparatuses of the same type are provided with the same reference numbers; however, alphabetical subscript characters subsequent to the reference numbers are omitted. For example, the phone terminals 11aa to 11ac, 11ba to 11bc, 11ca to 11cc, and 11da to 11dc are abbreviated as the phone terminal(s) 11. Likewise, the relay apparatuses 30a to 30d are abbreviated as the relay apparatus(es) 30.

The update server 60 serves as an update information providing apparatus (a second communication apparatus) that manages information associated with updates of programs of the phone terminals (first communication terminals) 11 and various types of setting information of the phone terminals 11, and provides such information in response to requests from the phone terminals 11. Examples of the information associated with updates include data files of all versions from earlier versions to the latest versions of the programs of the phone terminals 11 and various types of setting information of the phone terminals 11, and metadata (meta-information) describing update contents for each of the versions. The reason for allowing the update server 60 to manage the data of all the versions as the information associated with the updates is because the phone terminals 11 update data at different timing.

For example, the phone terminal 11 that updates programs frequently may need updating only with the latest version; however, the phone terminal 11 that updates programs at long intervals may need updating a program several times until updating it with the latest version. In such a case, the phone terminal 11 may initially update its program with certain old versions having dependent relationships with the latest version instead of updating its program directly with the latest version. Since there are some phone terminals 11 that need updating programs with the old versions having the dependent relationships with the latest version, the update server 60 manages data of all the versions as information associated with the updates.

Note that there are two types of updates, namely, a normal update and a forced update. The normal update is aimed at eliminating errors such as bugs or adding functions.

The forced update is aimed at updating the information necessary along with change in functions of other apparatuses differing from the functions of the phone terminal 11, or along with change in functions of the phone terminal 11 itself. For example, data formats or video codecs of sound and images transmitted or received for calling may be changed in the relay apparatus 30, and a version of the relay apparatus 30 associated with video such as an encoder update may be updated due to such changes. Further, a communication protocol with the relay apparatus 30 may be changed. The above changes may change structures of the sound, images, and videos themselves, or the change in the communication protocol may change a communication procedure itself with the relay apparatus 30, or functions of the relay apparatus 30. Hence, the phone terminal 11 before being updated is not able to perform a primary function of making a phone call. Thus, a forced update may be run on the phone terminal 11 to cause it to be adapted to the updated version of the relay apparatus 30 in such a case.

Further, when there is a security problem such as a security hole found in the relay apparatus 30, an update for eliminating vulnerability due to the security hole may be run on the relay apparatus 30. The phone terminal 11 before being updated is not able to make a phone call. Hence, a forced update may be run on the phone terminal 11 so as to cause it to be adapted to countermeasures against the vulnerability due to the security hole in the relay apparatus 30.

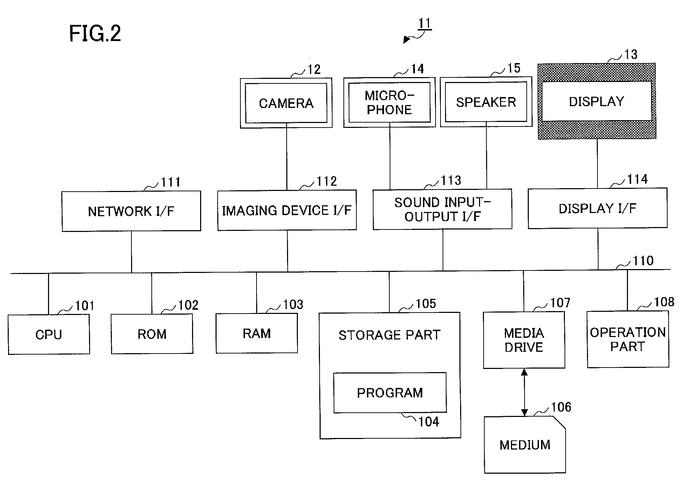

FIG. 2 is a diagram illustrating a hardware configuration example of a phone terminal.

As illustrated in FIG. 2, the phone terminal 11 includes a central processing unit (CPU) 101, a read only memory (ROM) 102, a random access memory (RAM) 103, a storage part 105, a media drive 107, an operation part 108, a network I/F 111, an imaging device I/F 112, a sound input-output I/F 113, and a display I/F 114, which are connected to one another via a bus 110.

The CPU 101 is configured to centrally control operations of the phone terminal 11 by loading programs 104 stored in the ROM 102 or the storage part 105 in the RAM 103, and sequentially executing the loaded programs. The storage part 105 may be a hard disk drive (HDD), and a solid state drive (SDD), and is configured to store data to be readable/writable. Specifically, the storage part 105 stores the programs 104 to be executed by the CPU 101, or various types of setting information. When the phone terminal 11 is updated, the programs 104 or various types of setting information stored in the storage part 105 are updated.

The media drive 107 is a drive device configured to read data from or write on a medium 106 such as an optical disk. The operation part 108 includes a keyboard, various types of keys, a touch panel stacked on the display 13, and the like, and is configured to receive user's operational inputs. The network I/F 111 is an interface connected to the communication network 2 and configured to perform data communications via the communication network 2. The imaging device I/F 112 is an interface connected to a camera (digital still camera) 12 and configured to acquire an image imaged by the camera 12. The sound input-output I/F 113 is an interface connected to a microphone 14 and a speaker 15, and configured to input sound via the microphone 14 and output sound via the speaker 15. The display I/F 114 is an interface connected to a display 13 such as a liquid crystal display (LCD) and the like, and configured to output display data to the display 13. Note that the present embodiment employs the display 13; however, the present embodiment may include a display apparatus other than the display 13 such as a projector or the like.

When the phone terminal 11 is engaged in receiving a phone call from another phone terminal 11, the phone terminal 11 outputs the images acquired from the camera 12 or sound input via the microphone 14 to the relay apparatus 30 via the network I/F 111, under the control of the CPU 101 that has executed the program 104. Further, the phone terminal 11 outputs from the speaker 15 sound input from the other phone terminal 11 and relayed by the relay apparatus 30 via the network I/F 111 and similarly displays on the display 13 the images acquired from the other phone terminal 11. The phone terminal 11 may thus be able to make a phone call with the other phone terminal 11 by exchanging the images or sound. That is, the phone terminal 11 may be able to implement a so-called TV conference with the other phone terminal 11. Note that the phone terminal 11 may be any communication terminal such as a general purpose personal computer (PC), a smartphone, a mobile phone, and a tablet terminal.

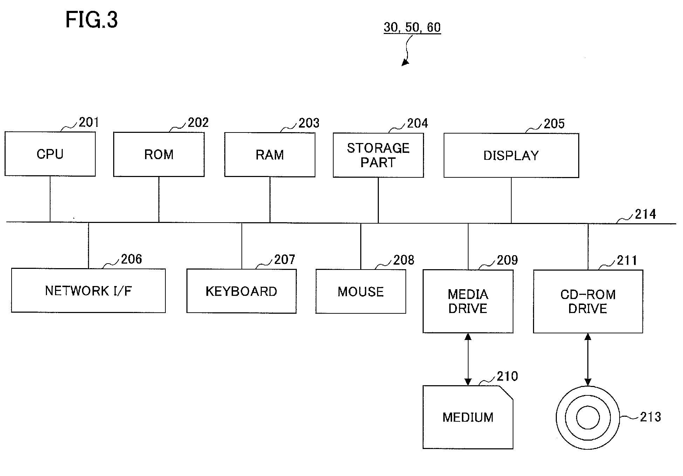

FIG. 3 is a diagram illustrating a hardware configuration example of the relay apparatus 30, the communication management server 50, and the update server 60.

As illustrated in FIG. 3, each of the relay apparatus 30, the communication management server 50, and the update server 60 includes a CPU 201, a ROM 202, a RAM 203, a storage part 204, a display 205, a network I/F 206, a keyboard 207, a mouse 208, a media drive 209, and a CD-ROM drive 211, which are connected to one another via a bus 214. Each of the relay apparatus 30, the communication management server 50, and the update server 60 may be an apparatus such as a so-called personal computer (PC) or a workstation (WS).

The CPU 201 is configured to centrally control operations of the own phone terminal 11 by loading programs stored in the ROM 202 or the storage part 204 in the RAM 203, and sequentially executing the loaded programs. The storage part 204 may be an HDD or an SSD, and is configured to store data to be readable or writable. For example, the storage part 204 stores information associated with updates in the update server 60.

The display 205 may be an LCD. The network I/F 206 is an interface connected to the communication network 2 and configured to perform data communications via the communication network 2. Each of the keyboard 207 and the mouse 208 is configured to receive user's operational inputs. The media drive 209 is a drive device configured to read data from or write on a medium 210 such as an optical disk. The CD-ROM drive 211 is a drive device configured to read the CD-ROM 213. For example, the latest information associated with updates is provided by the medium 210 or the CD-ROM 213, and stored in the storage part 204 in the update server 60.

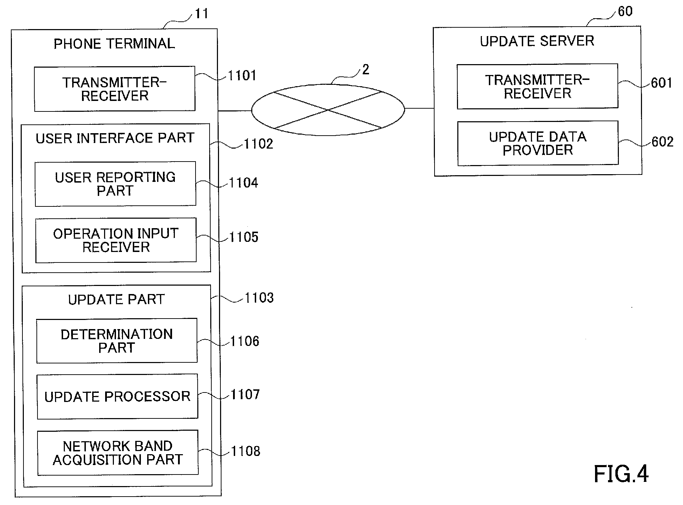

FIG. 4 is a diagram illustrating functional configuration examples of the phone terminal 11 and the update server 60. The functional configurations of the phone terminal 11 and the update server 60 may be mainly implemented by the CPU 101 or programs executed by the CPU 201.

In FIG. 4, the phone terminal 11 mainly includes a transmitter-receiver 1101, a user interface part 1102, an update part 1103. The update server 60 mainly includes a transmitter-receiver 601, and an update data provider 602. Note that part of or all of the functions of the phone terminal 11 and the update server 60 may be formed of hardware.

The transmitter-receiver 1101 of the phone terminal 11 is configured to transmit data to or receive data from the update server 60 via the communication network 2. Specifically, the transmitter-receiver 1101 transmits data to or receives data from the update server 60 by starting predetermined communication sessions between the phone terminal 11 and the update server 60, based on a communication address of the update server 60 set in advance in setting information stored in the storage part 105, or a communication address of the update server 60 acquired by querying the communication management server 50. The transmitter-receiver 1101 acquires information (e.g., metadata or update data) associated with the updates managed by the update server 60 by transmission or reception of such data.

The user interface part 1102 is an interface configured to control sound output from the speaker 15, a display screen of the display 13, and the user's operational input from the operation part 108. Specifically, the user interface part 1102 includes a user reporting part 1104 configured transmit various types of reports to the users by sound output via the speaker 15 or via a display screen of the display 13, and an operations input receiver 1105 configured to receive user's operational inputs via the operations part 108.

The update part 1103 is configured to control updating of programs 104 or various types of setting information stored in the storage part 105, and execute the updates based on associated information (metadata) associated with updates acquired from the update server 60. The update part 1103 includes a determination part 1106, an update processor 1107, and a network band acquisition part 1108.

The determination part 1106 is configured to determine whether a latest version of a target update is newer than a terminal version (apparatus version). Note that the terminal version indicates a current version of the program 104 of the update target of the phone terminal 11. The terminal version is set in the setting information in the storage part 105. For example, when an operating system (OS) is Windows (registered trademark) produced by Microsoft (R), terminal versions are set in the registry as setting information.

When the latest version is newer than the terminal version, and metadata includes specification of a dependent version that is the update version depending on the target update, the determination part 1106 compares the dependent version with the terminal version to determine whether the dependent version is newer than the terminal version.

The transmitter-receiver 1101 performs the following process based on the determined result. When the dependent version is newer than the terminal version, the transmitter-receiver 1101 sends a request for metadata indicating update with the dependent version to the update server 60, and receives the metadata of the dependent version from the update server 60. When the dependent version is not newer than the terminal version, the transmitter-receiver 1101 does not send the request for the metadata and will not receive the metadata accordingly.

The update processor 1107 executes update with the dependent version based on the metadata of the update program of the dependent version. After executing the update with the dependent version, the update processor 1107 executes update of the update program of the update target based on the metadata of the update program of the update target. Further, the update processor 1107 updates the terminal version to the latest version after executing the update of the program of the update target. The update processor 1107 receives a data file from a storage destination specified by the metadata and executes the update. Note that when the data file is a package file such as a cabinet file bundling data sets or a file of a ZIP format, the update processor 1107 executes scripts included in the package file to execute the update process. Note that the scripts are data of executable format stating an update execution process.

The network band acquisition part 1108 acquires network band information (band information) of the communication network 2 available to the transmitter-receiver 1101. The network band acquisition part 1108 may acquire (measure) the band information by monitoring a flow of the transmitting data or receiving data per unit time.

The transmitter-receiver 601 of the update server 60 is configured to transmit data to or receive data from the phone terminal 11 via the communication network 2. Specifically, the transmitter-receiver 601 transmits data to or receives data from the phone terminal 11 by starting a communication session using a predetermined protocol in response to a request from the phone terminal 11 via the communication network 2.

The update data provider 602 is configured to provide the phone terminal 11 with information associated with updates managed by the update server 60 in response to a request from the phone terminal 11 to which the transmitter-receiver 60 transmits data or from which the transmitter-receiver 60 receives data.

### OPERATIONS

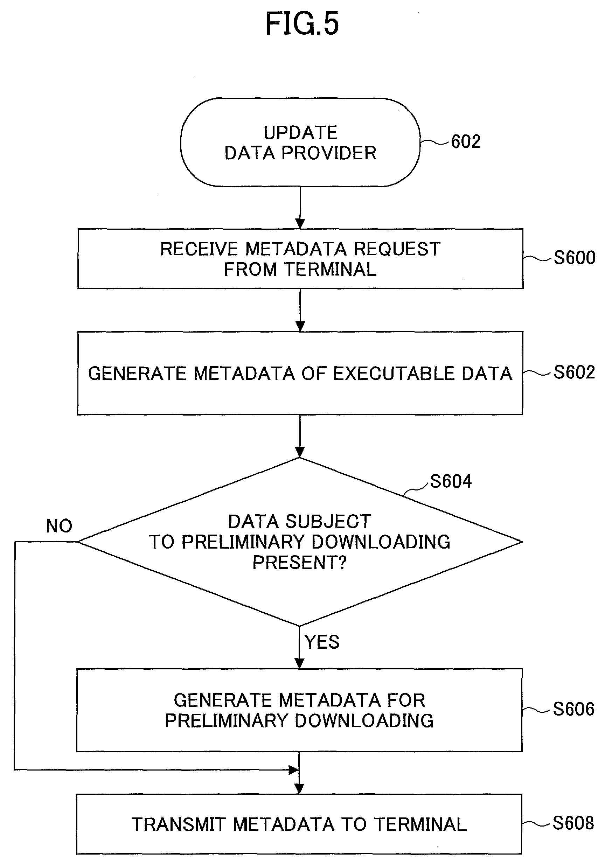

FIG. 5 is a flowchart illustrating a process example of the update data provider 602 of the update server 60.

In FIG. 5, the update data provider 602 receives a metadata request from the phone terminal 11 (step S600).

The update data provider 602 that has received the metadata request generates metadata of currently update available data (currently update executable data) (step S602).

The update data provider 602 determines whether there are data subject to preliminary downloading (step S604). Note that the data subject to preliminary downloading indicates update data for which update is currently unavailable (unexecutable) but may be downloaded in advance of (before) the update available date. That is, the data subject to preliminary downloading indicates update data that may be downloaded in advance before updating the application for performing a video conference. The preliminary downloading of update data may prevent accesses concentrated on the update server 60 at the time of executing the update.

The update data provider 602 determines whether there are update data that may be downloaded in advance (whether the preliminary downloading of the data is available) based on the time of "valid date" included in the later-described metadata being later (i.e., future) than the current time. The update data provider 602 may acquire the current time from a network time protocol (NTP) server or from a built-in clock in the apparatus.

When the update data provider 602 determines that there are update data that may be downloaded in advance ("YES" in step S604), the update data provider 602 generates metadata of the update data subject to downloading in advance (the preliminary downloading) (step S606). The update data provider 602 subsequently transmits the metadata of the currently executable update data and the metadata of the update data subject to the preliminary downloading to the phone terminal 11 (step S608).

When the update data provider 602 determines that there are no update data that may be downloaded in advance ("NO" in step S604), the update data provider 602 only transmits the metadata of the currently update executable data to the phone terminal 11 (step S608).

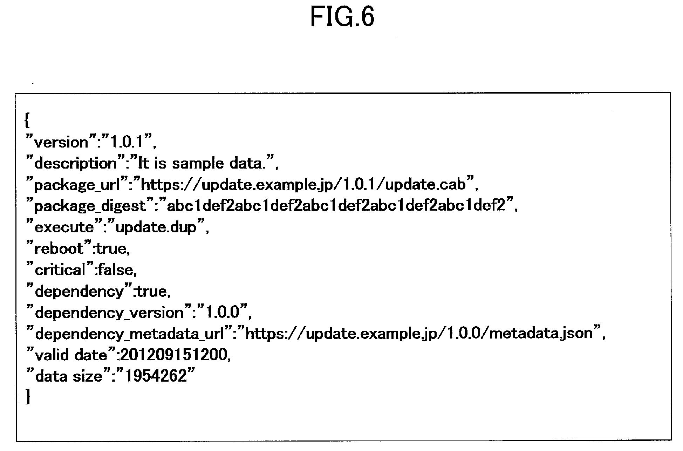

FIG. 6 is a diagram illustrating an example of the metadata.

As illustrated in FIG. 6, the metadata of each version includes data items of "version", "description", "package_url", "package_digest", "execute", "reboot", "critical", "dependency", "dependency_version", "dependency_metadata_url", "valid date", "data size", and the like. The data item of "version" sets a version number of the update program such as "1.0.1". The data item of "dependency" is a flag indicating whether there is a dependent version that is another version having a dependency relationship with the current version. When there is a dependent version, the data item of "dependency" sets "true", and when there is no dependent version, the data item of "dependency" sets "false". When there is a dependent version, the data item of "dependency_version" sets a version number of another version having a mutually dependent relationship with the current version; that is, the data item of "dependency_version" sets a version number of the dependent version. Accordingly, the dependent version may be traced back to by checking the version stated in the data item of "dependency_version". The data item of "dependency_metadata_url" sets a storage destination of the metadata of the dependent version.

The data item of "description" sets details of the version such as "It is sample data.".

The data item of "package_url" sets URL of a storage destination of the program (data file) serving as entity of the update managed by the update server 60. The data item of "package_digest" sets checksum of the data file serving as the entity of the update. Accordingly, the update processor 1107 may be able to execute updating associated with the version illustrated in the metadata by causing the transmitter-receiver 1101 to acquire the data file based on content illustrated in data item of the "package_url".

The data item of "execute" sets a script name to be executed when the update is executed. When the acquired data file is a package file of the package format, the script is included in the package file. The data item of "reboot" is a flag indicating whether to reboot (restart) the phone terminal 11 after executing the update. When rebooting the phone terminal 11, the data item of "reboot" sets "true", and when not rebooting the phone terminal 11, the data item of "reboot" sets "false". The data item of "critical" is a flag indicating whether the update is a forced update. When the update is a forced update, the data item of "critical" sets "true", and when the update is not a forced update, the data item of "critical" sets "false". The data item of "valid date" states date and time where the update data are allowed to be executed. That is, the data item of "valid date" is information capable of determining whether the update data are downloadable in advance (whether the update data are preliminary downloadable data). The data item of "data size" states a size of the update data.

Some of the updates of the programs 104 stored in the storage part 105 are associated with control on devices such as the network I/F 111, the imaging device I/F 112, the sound input-output I/F 113, the display I/F 114, and the like. "True" is set in the "reboot" since updating such device controls may require rebooting after the updating. Further, the update of the programs 104 includes normal update and forced update, and "true" is set in the "reboot" when the update of the programs 104 is a forced update.

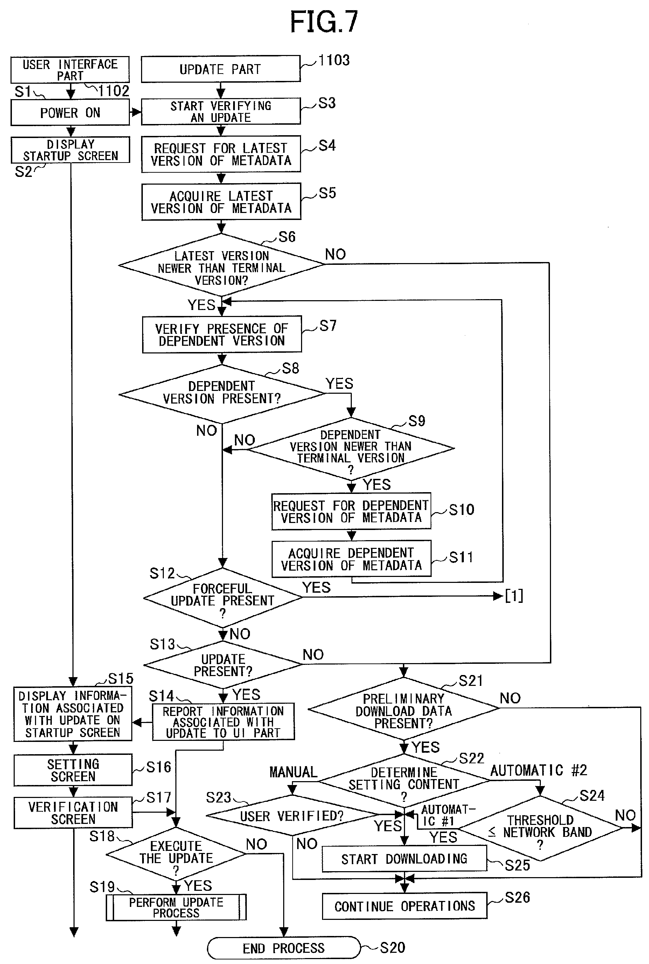

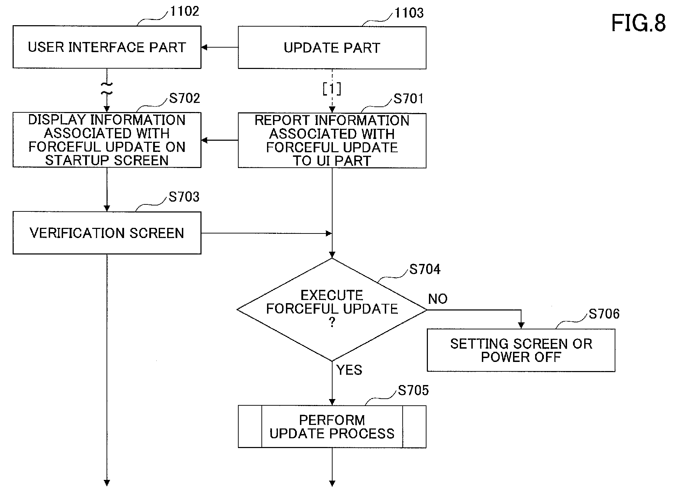

FIGS. 7 and 8 are flowcharts illustrating processes of the phone terminal 11.

As illustrated in FIG. 7, the user interface part 1102 supplies power (power ON) to an own apparatus (phone terminal 11) (step S1) based on an operation on a power supply switch or the like of the operation part 108, and displays a startup screen on the display 13 (step S2). The startup screen is a display screen presenting a list of calling statuses of the phone terminals 11 obtained as a result of transmitting the inquires to a remote communication management server 50 under control of the CPU 101 (details will be described later).

The update processor 1107 of the update part 1103 starts verifying the update for the own apparatus at activation of the own apparatus after the power is supplied in step S1 (step S3). The following illustrates an example of updating a program; however, other setting information may be updated in a similar manner.

The update part 1107 starts verifying the update, the update processor 1107 causes the transmitter-receiver 1101 to transmit a request for metadata of a latest version of a program to the update server 60 (step S4), and acquires the metadata provided by the update data provider 602 of the update server 60 in response to the request (step S5).

The determination part 1106 subsequently acquires a terminal version from the setting information in the storage part 105, and determines whether the latest version is newer than the terminal version of the phone terminal 11 (step S6).

When the latest version is not newer than the terminal version of the phone terminal 11 ("NO" in step S6), that is, when the latest version is the same version as, or older than the terminal version of the phone terminal 11, the determination part 1106 proceeds with determination of preliminary downloading (step S21).

On the other hand, when the latest version is newer than the terminal version of the phone terminal 11 ("YES" in step S6), the update processor 1107 verifies the presence of the dependent version based on the description of the data item of "dependency" of the acquired metadata (step S7). For example, when the data item of the "dependency" is "true" and the data item of "dependency_version" describes a version number indicating a different number such as "1.0.0" as illustrated in FIG. 6, the update processor 1107 verifies that there is a dependent version. Further, when the data item of the "dependency" is "false", the update processor 1107 verifies that there is no dependent version.

The determination part 1106 determines whether there is a dependent version as a result of the verification in step S7 (step S8). When the determination part 1106 determines that there is a dependent version ("YES" in step S8), the determination part 1106 determines whether the dependent version is newer than the terminal version (step S9). When the determination part 1106 determines that the dependent version is newer than the terminal version ("YES" in step S9), the update processor 1107 transmits a request for metadata of the program of the dependent version to the update server 60 based on a storage destination set in the data item of "dependency_metadata_url" of the already acquired metadata (step S10). The update processor 1107 subsequently acquires the metadata of the dependent version provided by the update data provider 602 in response to the request (step S11), and returns the process to step S7. Thus, the update processor 1107 sequentially traces back to versions on which the latest version is dependent to acquire metadata associated with those dependent versions only when the dependent version is newer than the terminal version.

When the determination part 1106 determines that there is no dependent version ("NO" in step S8), or when the determination part 1106 determines that there is a dependent version ("YES" in step S8) but that the determination part 1106 determines that the dependent version is not newer than the terminal version ("NO" in step S9), the update processor 1107 determines whether the data item of "critical" sets "true" to determine whether a current update is a forced update (step S12).

When the update processor 1107 determines that the data item of "critical" does not set "true" ("NO" in step S12), the update processor 1107 compares a version number described in the data item of "version" of the metadata of the latest version with the terminal version (version number of the program 104 stored in the storage part 105) of the own apparatus to determine whether there is an update for the own apparatus (i.e., whether the updating has already been completed) (step S13). Specifically, the version number of the latest version that matches the terminal version indicates the program 104 being the latest version, and hence, the update processor 1107 determines that there is no update necessary for the own apparatus (i.e., the updating has already been completed). The version number of the latest version that does not match the version number of the program 104 indicates that the program 104 is an old version, and the update processor 1107 determines that there is update necessary for the own apparatus (i.e., the updating has not been completed yet). When the update processor 1107 determines that there is no update for the own apparatus ("NO" in step S13), the update processor 1107 proceeds with determination of the preliminary downloading (step S21).

When the update processor 1107 determines that there is an update for the own apparatus ("YES" in step S13), the update part 1107 reports information associated with the update to the user interface part 1102 (step S11). Specifically, the update part 1103 reports data items, other than those unnecessary for reporting to the user such as "package_url", "execute", and the like among the metadata having the latest version and versions on which the latest version is dependent, as information associated with the update to the user interface part 1102.

The user reporting part 1104 of the user interface part 1102 reports to the user by displaying a message that there are update data necessary for the own apparatus on the startup screen of the display 13, based on the information associated with the update reported by the update processor 1107 in step S14 (step S15).

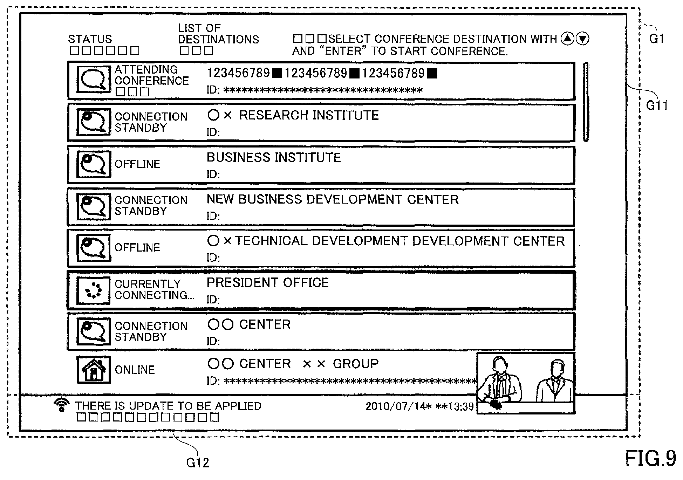

The following illustrates details of the startup screen. FIG. 9 is a schematic diagram illustrating an example of the startup screen G1. As illustrated in FIG. 9, the start screen G1 is configured to include a main screen G11 displaying a list of calling statuses of the phone terminals, and a status screen G12 displaying a status of the own apparatus (own phone terminal). When the user reporting part 1104 receives information associated with an update from the update processor 1107, the user reporting part 1104 reports to the user by displaying a message that there is an update on the status screen G12. Note that the display of the message that there is an update is not limited to a layout illustrated in FIG. 8, and the message may be displayed with a predetermined icon image on the main screen G11. Note that in the examples of a screen illustrated in FIGS. 9 to 15, outlined squares or solidly filled squares represent areas that may display messages. Those outlined squares or solidly filled squares may be predetermined message display areas over the system.

When the operations input receiver 1105 of the user interface 1102 receives an operational instruction for applying various types of settings such as updating in response to the report to the user in step S15, the user interface part 1102 displays a setting screen on the display 13 (step S16).

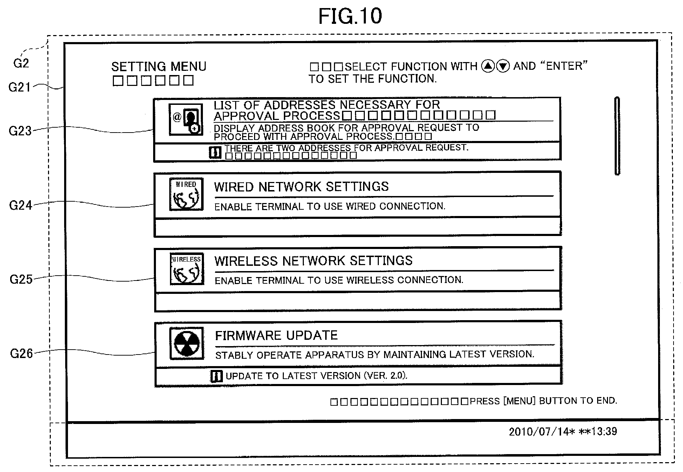

FIG. 10 is a schematic diagram illustrating an example of a setting screen G2. As illustrated in FIG. 10, the setting screen G2 is configured to include a main screen G21 displaying setting buttons G23 to G26 for implementing various types of settings by receiving the user's selecting operation via the operations input receiver 1105. The setting button G26 among the setting buttons G23 to G26 is used for instructing running the update. When the information associated with an update is not reported from the update processor 1107, indicating that the own apparatus (own phone terminal) includes no update, the setting button G26 is displayed with a light shade of gray (gray out), indicating that the user's selecting operation is disabled. By contrast, when the information associated with the update is reported from the update processor 1107, indicating that the own apparatus (phone terminal) includes an update, the gray out display of the setting button G26 is cancelled, indicating that the operations input receiver 1105 is ready to receive the user's selecting operation. In this case, the setting button G26 may describe the version number of the latest version subject to updating based on the description of the data item of the "version" included as the information associated with the update. In this example, the version number is updated to the latest version of the version number 2.0. Note that the setting screen G2 may further be configured to include a status screen to display a status of the own apparatus (own phone terminal).

Referring back to FIG. 7, when the user performs the selecting operation to select the setting button G26, the user interface part 1102 displays a verification screen to verify the execution of the update on the display 13 (step S17).

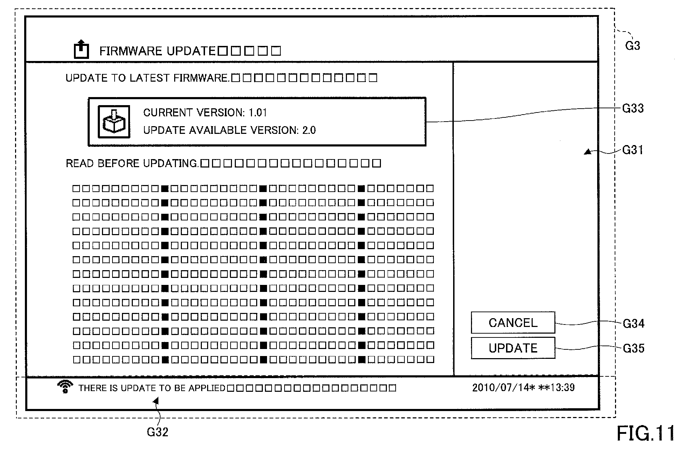

FIG. 11 is a schematic diagram illustrating an example of a verification screen G3. As illustrated in FIG. 11, the verification screen G3 is configured to include a main screen G31 including an update display G33 to display content of an update to be executed, operation buttons G34 and G35 to receive an instruction to execute the update based on the displayed content or an instruction to cancel the update, and a status screen G32 to display a status of the own apparatus (own phone terminal). The update display G33 displays information such as the current version that is the version number of the program 104 of the own apparatus (own phone terminal), and the version number of the latest version subject to updating based on the description of the data item of "version" included as information associated with an update to report the displayed information to the user. The user may thus be able to verify the version number to which the current version of the program is updated based on displayed content of the update display G33. Note that the update display G33 of the verification screen G3 may further be configured to display information indicating whether to restart the own apparatus (own phone terminal) with reference to the data item of "reboot".

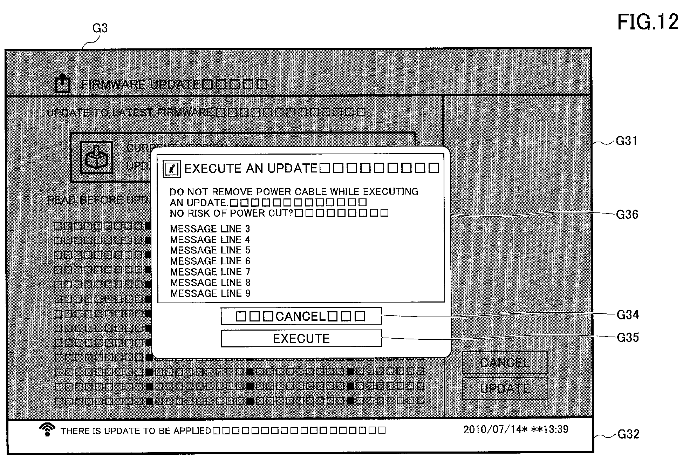

FIG. 12 is a schematic diagram illustrating an example of a verification window G36. The verification screen G3 may further display the verification window G36 to encourage the user to verify the displayed content when the operation button G35 is selected to give an instruction to execute an update. The verification window G36 displays a notice when a predetermined update is executed in addition to displaying information such as the version number of the latest version subject to updating. When receiving an instruction to execute the update, the verification screen G3 displays the verification window G36 to remind the user of executing the update. Note that the verification window G36 of the verification screen G3 may further be configured to display information indicating whether to restart the own apparatus (own phone terminal) with reference to the data item of "reboot".

Referring back to FIG. 7, the update processor 1107 determines whether to execute an update based on the user's selecting operation on the verification screen G3 to select the operation button G34 or G35 (step S15). When the user selects the operation button G35 to give an instruction to execute the update ("YES" in step S18), the update processor 1107 executes an update process based on the acquired metadata (step S19). Note that details of the update process will be described later.

When the user selects the operation button G34 to give an instruction to cancel the execution of the update ("NO" in step S18), the update processor 1107 executes an ending process to end the process of the own apparatus (own phone terminal) (step S20), and then turns off the power.

That is, when the phone terminal 11b includes an update of the own phone terminal, the presence of the update is reported to the user from the user reporting part 1104 of the user interface part 1102. The phone terminal 11 subsequently receives from the user the selecting operation via the operation input receiver 1105 indicating whether to execute that update. When the user performs the selecting operation to execute the update, the update processor 1107 executes the update process. Accordingly, when the phone terminal 11 includes an update to be executed in the own apparatus (own phone terminal), the phone terminal 11 allows the user to select the execution of that update.

In step S12, when the data item of "critical" of the metadata sets "true"; that is, when the metadata indicates the forced update ("YES" in step S12), the update processor 1107 of the update part 1103 reports information associated with the forced update to the user interface part 1102 in FIG. 8 (step S701). Specifically, the update part 1103 reports data items, other than those unnecessary for reporting to the user such as "package_url", "execute", and the like among the metadata having the latest version and versions on which the latest version is dependent, as information associated with the update to the user interface part 1102, in a manner similar to the normal update case.

The user reporting part 1104 of the user interface part 1102 reports to the user by displaying a message that there are forced update data necessary for the own apparatus (own phone terminal) on the startup screen G1 (see FIG. 9) of the display 13, based on the information associated with the forced update reported by the update processor 1107 (step S702). Specifically, the user reporting part 1104 reports to the user a message that the update present in the own phone terminal is a forced update by displaying the message on the status screen G12, or by displaying the list on the main screen G11 with a light shade of gray (gray out) to indicate that operations other than updating are disabled.

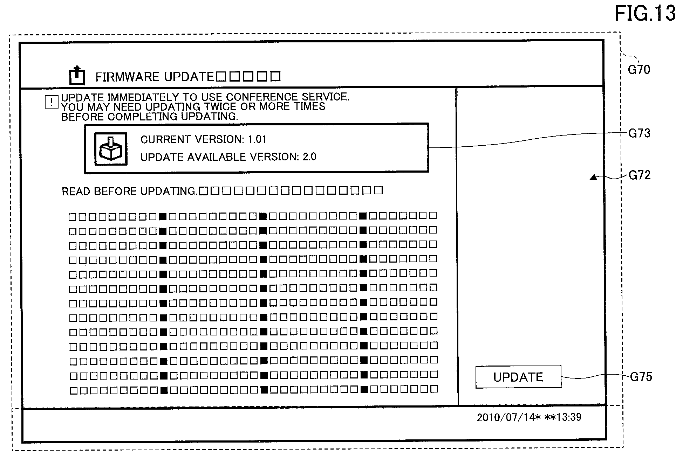

When the message is reported to the user in step S702, the user interface part 1102 displays a verification screen G70 (see FIG. 13) for verifying the execution of the update on the display 13 (step S703). Note that the user interface part 1102 does not display the setting screen G2 for setting the update (see FIG. 10) on the display 13, as displayed in the normal update case.

FIG. 13 is a schematic diagram illustrating an example of the verification screen G70 displayed at the execution of the forced update. As illustrated in FIG. 13, the verification screen G70 is configured to include a main screen including an update display G73 displaying the update content to be executed, and an operation button G75 for receiving the update execution instruction from the user. The update display G73 displays information such as the current version that is the version number of the program 104 of the own apparatus (own phone terminal), and the version number of the latest version subject to updating based on the description of the data item of "version" included as information associated with an update to report the displayed information to the user. The user may thus be able to verify the version number to which the current version of the program is updated based on displayed content of the update display G73.

Note that only an operation button G75 is displayed on the verification screen G70 for verifying the forced update and a cancel button G34 displayed on the verification screen G3 for verifying a normal update (see FIG. 11) will not be displayed on the verification screen G70. This is because it is mandatory to execute the forced update. However, the verification screen G70 may be shifted to the setting screen with the operation button corresponding to the menu key of the operation part 108 or the power may be turned off by depression of the power switch 109.

Referring back to FIG. 8, the update processor 1107 determines whether to execute the forced update based on the user's selecting operation on the verification screen G70 to select the operation button G75 (step S704). When the user selects the operation button G75 to give an instruction to execute the forced update ("YES" in step S704), the update processor 1107 executes an update process based on the acquired metadata (step S705).

When the operation button G75 is not depressed but the operation button of the operation part 108 is depressed ("NO" in step S704), the setting screen may be displayed or the power is turned off by following an instruction given via the depressed one of the operation buttons (step S706).

Referring back to FIG. 7, when the latest version is not newer than the terminal version ("NO" in step S6), or when there is no update necessary for the own apparatus (own phone terminal), the update part 1103 determines whether there are update data available for the preliminary downloading (step S21). In this step, the update part 1103 determines whether there are update data subject to preliminary downloading based on whether a future time compared to the current time is set in the "valid date" of the metadata.

When the update part 1103 determines that there are no update data subject to preliminary downloading ("NO" in step S21) indicating that there is no need to perform preliminary downloading and executing an update in advance, the update part 1103 continues to perform normal operations (step S26). When the update part 1103 determines that there are update data subject to preliminary downloading ("YES" in step S21), the update part 1103 determines setting contents set in advance by the user (step S22).

The setting contents may include, for example, as follows.
- Manual setting
- Automatic #1 setting
- Automatic #2 setting

The manual setting includes requesting the user to verify whether to execute the preliminary downloading of the update, and executing the preliminary downloading when the user explicitly operates to execute the preliminary downloading. The manual setting allows the user to execute the preliminary downloading at a timing convenient for the user.

The automatic #1 setting includes automatically executing the preliminary downloading without verifying the preliminary downloading with the user. The automatic #1 setting facilitates the fastest preliminary downloading without user's operation as well as enabling constant execution of the preliminary downloading via a narrower network band.

The automatic #2 setting executes the preliminary downloading without the verification of the user when the band indicated by the network band information acquired by the network band acquisition part 1108 is a predetermined threshold or more. The automatic #2 setting is aimed at preventing adverse effects on main functions (e.g., video communications) caused by executing the preliminary downloading of update data even if the network environment is congested. The automatic #2 setting enables execution of the preliminary downloading with little effect on the main function by setting a predetermined threshold in the network band. Note that the user may be allowed to determine the threshold to best comply with the network environment of the user.

The embodiment describes three modes of the settings; the manual, the automatic #1, and the automatic #2; however, the three modes of the settings may be selectable settings. For example, only the automatic #1 may be selectable, or the automatic #1 and the automatic #2 may be selectable.

When the setting content is the "manual" ("MANUAL" in step S22), whether to execute the preliminary downloading is verified by the user (step S23).

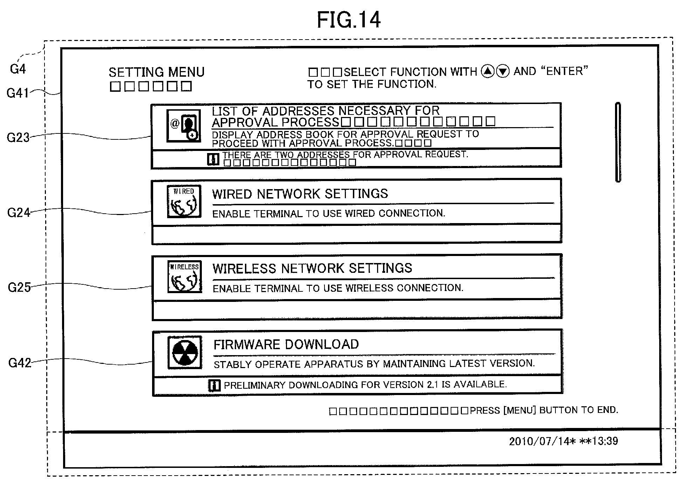

The user interface part 1102 reports to the user that there are update data available for the preliminary downloading by displaying, for example, a screen illustrated in FIG. 14. The setting screen G4 is configured to include a main screen G41 displaying setting buttons G23 to G25 and G42 for implementing various types of settings by receiving the user's selecting operation via the operations input receiver 1105. The setting button G42 of the setting buttons G23 to G25 and G42 is used for giving an instruction for running the update. The setting button G42 may describe the version number of the latest version subject to preliminary updating based on the description of the data item of the "version" included as the information associated with the preliminary updating. The example of FIG. 14 demonstrates that the latest version having the version number 2.1 is available for preliminary downloading.

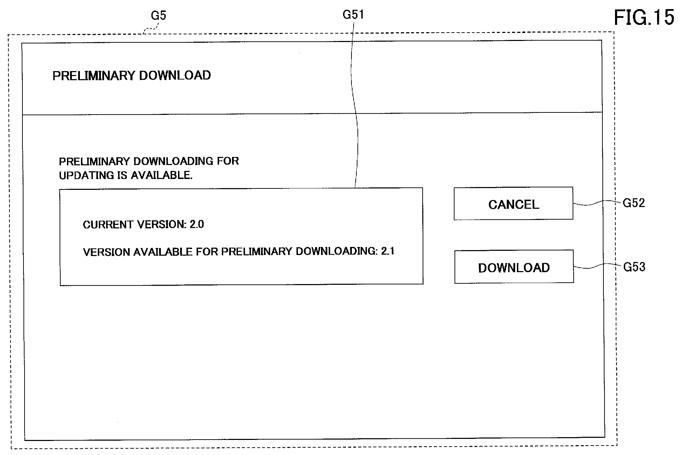

When the user interface part 1102 receives an input of selecting the setting button G42, the user interface part 1102 displays a setting screen for the preliminary downloading illustrated in FIG. 15. The setting screen G5 for the preliminary downloading illustrated in FIG. 15 includes a preliminary update display G51 displaying content of the update data available for the preliminary downloading and operation buttons G52 and G53 for receiving respective instructions to cancel and execute the preliminary downloading of the update data of that content.

Referring back to FIG. 7, when the user performs a verification operation to execute the preliminary downloading ("YES" in step S23), the preliminary downloading starts (step S25), and a normal operation continues (step S26). When the user performs a verification operation not to execute the preliminary downloading ("NO" in step S23), the normal operation continues without executing the preliminary downloading (step S26).

When the setting content is the "automatic #1" ("AUTOMATIC #1" in step S22), the preliminary downloading starts (step S25), and the normal operation continues (step S26).

When the setting content is the "automatic #2" ("AUTOMATIC #2" in step S22), whether the network band is the predetermined threshold or more is determined (step S24). When the network band is the predetermined threshold or more ("YES" in step S24), the preliminary downloading starts (step S25), and the normal operation continues (step S26). When the network band is not the predetermined threshold or more ("NO" in step S24), the normal operation continues without executing the preliminary downloading (step S26).

Note that when a video conference starts while executing the preliminary downloading, any one of the following processes is performed.
- The preliminary downloading continues regardless of whether the video conference has started.
- The preliminary downloading is temporarily stopped by the start of the video conference and the temporarily stopped preliminary downloading is resumed by ending of the video conference.
- When the video conference has started and a predetermined bandwidth is acquired, the preliminary downloading continues; or when the video conference has started and a predetermined bandwidth is not acquired, the preliminary downloading is temporarily stopped and the temporarily stopped preliminary downloading is resumed by ending of the video conference or acquiring the predetermined bandwidth.

The following illustrates details of the update process (step S19 illustrated in FIG. 7, and step S705 illustrated in FIG. 8).

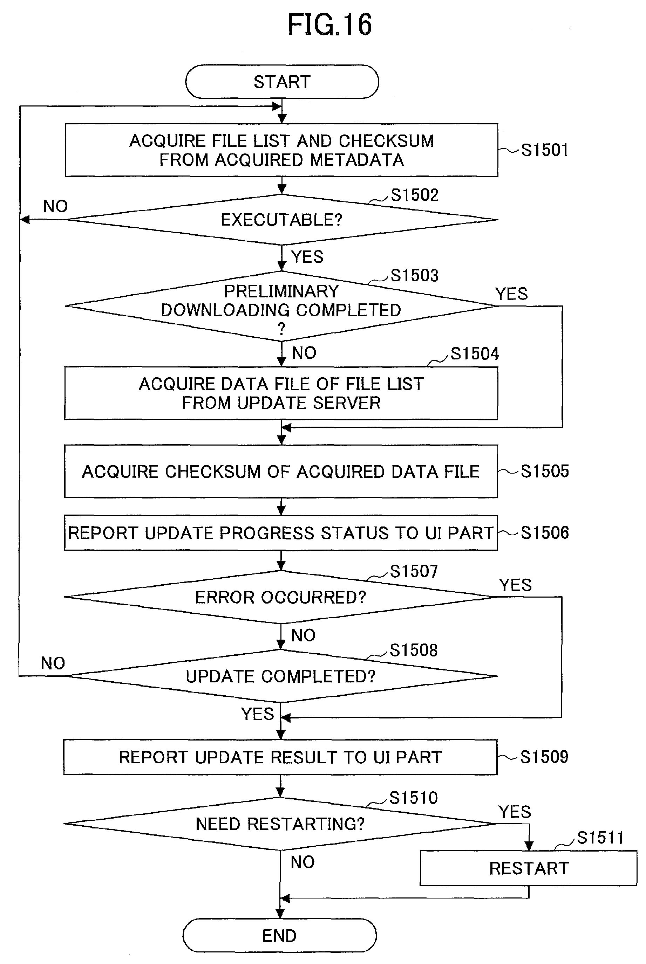

As illustrated in FIG. 16, when the update part 1103 starts an updating process, the update part 1103 deactivates functions of interface parts such as the imaging device I/F 112, the sound input-output I/F 113 and the like used for connecting to external apparatuses such as the camera 12, the microphone 14, and the speaker 15. When the interface parts are activated, the programs 104 associated with the interface parts are being used while updating. Hence, an error may occur to cause failure of the update process. Accordingly, the update part 1103 deactivates the functions of the above-described interface parts along with the start of the update process.

The update part 1103 subsequently acquires a file list of the data files (update data) for use in updating from the data item of "files" of the acquired metadata, and checksum for the files (step S1501). When the update part 1103 acquires several dependent versions of the metadata, steps S1501 to S1508 are performed on the metadata in the order from the oldest version to the latest version.

The update part 1103 subsequently determines whether the update using the data file (the update data) corresponding to the acquired metadata is executable, based on the update executable time and date stated in the data item "valid date" of the acquired metadata (step S1502). The update part 1103 determines that the update using the data files (update data) corresponding to the acquired metadata is executable when the time and date stated in the data item of "valid date" of the acquired metadata are older than the current time and date acquired from a timer part disposed, for example, in an NTP server or the own apparatus (own phone terminal).

When the update part 1103 determines that the update using the data files (update data) corresponding to the acquired metadata is executable ("YES" in step S1502), the update part 1103 determines whether the data files corresponding to the acquired metadata have already been downloaded from the update server 60 by the preliminary downloading process; that is, the update part 1103 determines whether the data files corresponding to the acquired metadata are the preliminary downloaded data (step S1503).

When the update part 1103 determines that the data files corresponding to the acquired metadata have not already been downloaded from the update server 60 by the preliminary downloading process ("NO" in step S1503), the update part 1103 acquires the data files (update data) of the file list acquired in step S1501 from the update server 60 (step S1504), and acquires the checksum of the acquired metadata (step S1505). When the update part 1103 determines that the data files corresponding to the acquired metadata have already been downloaded from the update server 60 by the preliminary downloading process ("YES" in step S1503), the update part 1103 acquires the downloaded data files (the preliminary downloading data) from a download destination (e.g., the storage part 105), and acquires the checksum of the acquired data files (step S1505). The update part 1103 subsequently executes the update of the program 104 using the acquired data files.

The update part 1103 subsequently reports an update progress status to the user interface part 1102 (step S1506). The update progress status report indicates up to which file, among the files included in the file list, the update part 1103 has completed the processes of Steps 1504 and S1505. Further, when the update part 1103 executes updates of several versions having dependent relationships, the update progress status report may indicate up to which version the update part 1103 has completed updating. The user interface part 1102 displays the reported update progress status on the screen of the display 13 to report the update progress status to the user.

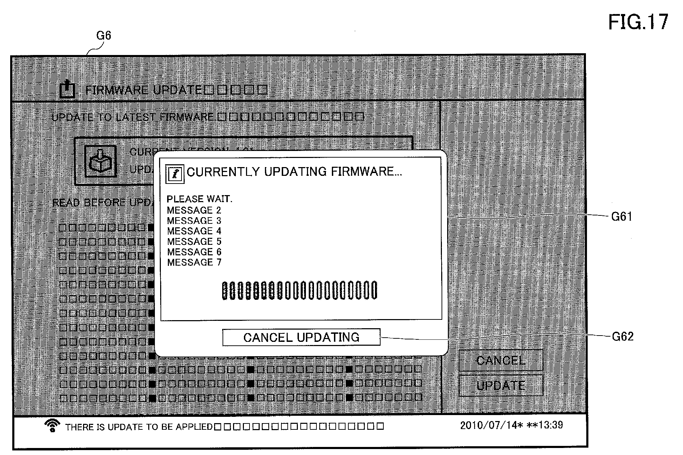

FIG. 17 is a diagram illustrating an example of the update screen displayed by the phone terminal 11. As illustrated in FIG. 17, an update screen G6 is displayed on the display 13 by the user interface part 1102 during the update process executed by the update part 1103. The update screen G6 displays an update status window G61 to display the update progress status reported by the update part 1103, and an operation button G62 for the user to give an instruction to cancel the update process. The user may be able to check the update progress status based on the displayed content of the update status window G61.

The user interface part 1102 may display remaining time of the update or the current line speed on the update screen G6 on a real time basis. In this case, the user may be provided with an advantage of identifying the update status in more detail.

Referring back to FIG. 16, the update part 1103 determines whether an update process error has occurred (step S1507). When there is an update process error ("YES" in step S1507), step S1509 is processed. In the present embodiment, the update part 1103 also determines that there has occurred an error when temporarily stopping the update by the operation of the operation button G62 of the update screen G6, or the version of the update executed in steps S1504 and S1505 requires restarting, in addition to an error caused by some factor while executing the update process (e.g., the difference between the checksum acquired in step S1505 and the checksum acquired in step S1501). Accordingly, when the update is executed from the earlier version (older version number) to the latest version, the process of steps S1501 to S1508 is exited at the stage where the version that requires restarting has been updated.

When the update process has no error ("NO" in step S1507), the update part 1103 determines whether the updates of all the versions associated with the acquired metadata have been completed (step S1508). When the update part 1103 determines that the updates of all the versions have not been completed ("NO" in step S1508), the update part 1103 returns to step S1501 to continue to perform the update process. When the update part 1103 determines that the updates of all the versions have been completed ("YES" in step S1508), the update part 1103 proceeds with step S1509.

The update part 1103 subsequently reports an update result to the user interface part 1102 (step S1509). The user interface part 1102 displays the reported update result on the screen of the display 13 to report to the user the update result.

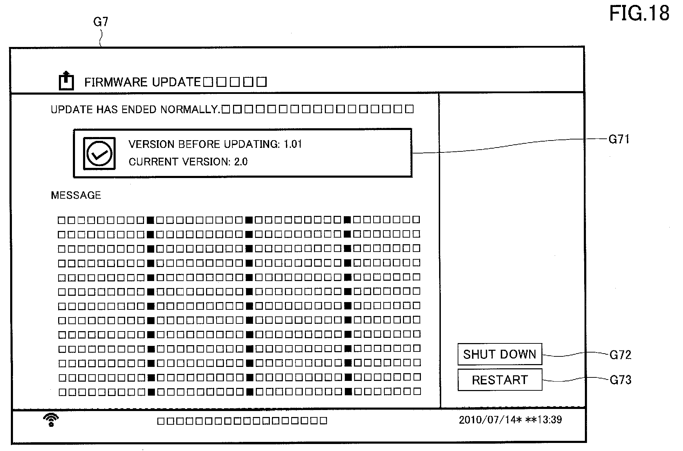

FIG. 18 is a diagram illustrating an example of the verification screen displayed by the phone terminal. The user interface part 1102 that has received the update result displays an update result G71 or operation buttons G72 and G73 for receiving a shutdown operation or a restarting operation after the execution of the update on the verification screen G5, as illustrated in FIG. 18. The update result G71 displays information associated with the version before updating, or information associated with the current version obtained as a result of the execution of the update. The user may be able to check the update result based on the display content of the update result G71.

Referring back to FIG. 16, the update part 1103 determines whether restarting (rebooting) the information processing apparatus (phone terminal) 11 is necessary based on the description in the data item of "reboot" included in the metadata of the update data used for updating (step S1510). When the update part 1103 determines that restarting (rebooting) the information processing apparatus (phone terminal) 11 is not necessary ("NO" in step S1510), the update part 1103 ends the update process without restarting the information processing apparatus (phone terminal) 11. When the update part 1103 determines that restarting (rebooting) the information processing apparatus (phone terminal) 11 is necessary ("YES" in step S1510), the update part 1103 restarts the information processing apparatus (phone terminal) 11 (step S1511). As described above, when the update that requires restarting is executed, the phone terminal will be restarted without the user's operation after the update has been executed.

### OUTLINE

As described above, the embodiment allows various users to execute preliminary downloading of the updates.

The preferred embodiments are described above. The above-described embodiments illustrate specific examples of the invention; however, the present invention is not limited to these examples, and various alterations or changes may be made without departing from the gist and the scope of the present invention. Specifically, the present invention shall not be construed as being limited to details of the specific examples and accompanying drawings thereof.

The present application is based on and claims the benefit of priority of Japanese Priority Application No. 2013-229104, filed on November 5, 2013, the entire contents of which are hereby incorporated by reference.

### [Description of Reference Symbols]

- 1: communication system
- 2: communications network
- 11: phone terminal
- 12: camera
- 13: display
- 14: microphone
- 15: speaker
- 30: relay apparatus
- 50: communication management server
- 60: update server
- 601: transmitter-receiver
- 602: update data provider
- 1101: transmitter-receiver
- 1102: user interface part
- 1103: update part
- 1104: user reporting part
- 1105: operations input receiver
- 1106: determination part
- 1107: update processor
- 1108: network band acquisition part

## Claims

1. A communication apparatus comprising:
a receiver configured to receive metadata of update data for use in updating;
a determination unit configured to determine whether there are update data subject to preliminary downloading indicating downloading the update data in advance before an update allowable time, based on a description of the metadata; and
an update process unit configured to download the update data when the determination unit determines that there are the update data subject to preliminary downloading.

2. The communication apparatus according to claim 1, further comprising:
a band information acquisition unit configured to acquire network band information, wherein
the update process unit downloads the update data subject to preliminary downloading when a bandwidth indicated by the network band information acquired by the band information acquisition unit is a predetermined threshold or more.

3. The communication apparatus according to claim 2, further comprising:
a setting unit configured to allow a user to set the predetermined threshold.

4. The communication apparatus according to claim 1, further comprising:
a setting unit configured to allow a user to set one of an automatic option for automatically executing the preliminary downloading and a manual option for manually executing the preliminary downloading, wherein
when the user sets the manual option in the setting unit, and the user operates to execute the preliminary downloading, the update process unit downloads the update data subject to the preliminary downloading.

5. The communication apparatus according to claim 4, further comprising:
a band information acquisition unit configured to acquire network band information, wherein
when the user sets the automatic option in the setting unit, the setting unit further allows the user to set whether to perform control based on the network band information, and
when the user sets the automatic option and performs the control based on the network band information in the setting unit, and a bandwidth indicated by the network band information acquired by the band information acquisition unit is a predetermined threshold or more, the update process unit downloads the update data subject to the preliminary downloading.

6. A communication system comprising:
a communication apparatus; and
an update server connected to the communication apparatus via a network, wherein
the update server includes
a provider configured to provide update data and metadata in response to a request from the communication apparatus, and wherein
the communication apparatus includes
a receiver configured to receive the metadata of the update data for use in updating;
a determination unit configured to determine whether there are update data subject to preliminary downloading indicating downloading the update data in advance before an update allowable time, based on a description of the metadata; and
an update process unit configured to download the update data when the determination unit determines that there are the update data subject to the preliminary downloading.

7. A communication method comprising:
receiving metadata of update data for use in updating;
determining whether there are update data subject to preliminary downloading indicating downloading the update data in advance before an update allowable time, based on a description of the metadata; and
downloading the update data when it is determined that there are the update data subject to the preliminary downloading.

8. A program for causing a computer forming a communication apparatus to execute a process, the process comprising:
receiving metadata of update data for use in updating;
determining whether there are update data subject to preliminary downloading indicating downloading the update data in advance before an update allowable time, based on a description of the metadata; and
downloading the update data when it is determined that there are the update data subject to the preliminary downloading.
